(19)

Europäisches
Patentamt
European
Patent Office
Office européen
des brevets

(11) **EP 3 643 454 A1**

(12) **EUROPEAN PATENT APPLICATION**

(43) Date of publication:
**29.04.2020 Bulletin 2020/18**

(51) Int Cl.:
***B25J 9/16*** *(2006.01)*

(21) Application number: **19168267.3**

(22) Date of filing: **09.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2018 CN 201811235992**

(71) Applicant: **New Era AI Robotic Inc.
105 Taipei City (TW)**

(72) Inventor: **CHEN, Ting-Shuo
105 Taipei City (TW)**

(74) Representative: **2K Patentanwälte Blasberg
Kewitz & Reichel
Partnerschaft mbB
Schumannstrasse 27
60325 Frankfurt am Main (DE)**

(54) **ANTI-COLLISION METHOD FOR ROBOT**

(57)     An anti-collision method for robot is provided. The method controls a robot (1) to sense a variation of electric field over continuous time via electric field sensor (11, 111-118, 511-513, 611-612, 71), determine a relative moving direction (D1, D2, f1-f7, $D_L$, $D_R$) of an obstacle (40, 42, 44, 46, 48) when detecting the obstacle (40, 42, 44, 46, 48) by the variation of electric field, generate motor control data according to the relative moving direction (D1, D2, f1-f7, $D_L$, $D_R$) of the obstacle (40, 42, 44, 46, 48), and control a motor (12) to rotate according to the motor control data for making a robotic limb (20-24, 30, 5) move along a dodge vector to dodge the obstacle (40, 42, 44, 46, 48). The anti-collision method can effectively make the robot (1) dodge automatically before a collision, and prevent the robot (1) or the obstacle (40, 42, 44, 46, 48) from crash and damage.

```
           begin

    ┌──────────────────────────┐
    │ sense variation of       │── S10
    │ electric field           │
    └──────────────────────────┘
                 │
            ╱─────────╲         S11
     no    ╱ Is any     ╲
    ◄─────< obstacle     >
            ╲ detected?  ╱
             ╲─────────╱
                 │ yes
    ┌──────────────────────────┐
    │ determine a relative     │── S12
    │ moving direction of      │
    │ the obstacle             │
    └──────────────────────────┘
                 │
    ┌──────────────────────────┐
    │ determine motor control  │── S13
    │ data                     │
    └──────────────────────────┘
                 │
    ┌──────────────────────────┐
    │ control a motor to       │── S14
    │ rotate for dodging the   │
    │ obstacle                 │
    └──────────────────────────┘
                 │
               end
```

FIG.10

EP 3 643 454 A1

**Description**

BACKGROUND OF THE INVENTION

Field of the Invention

The technical field relates to a robot and more particularly relates to an anti-collision method for robot.

Description of Related Art

Many robots with the mechanical arm have been provided in the related art. Above-mentioned mechanical arm has an ability of precision operation (such as picking an object, placing an object, or moving an object and so forth), and can be used to replace with the human or co-work with the human. More specifically, above-mentioned mechanical arm comprises a plurality of motors, each motor is respectively configured to move the mechanical arm in a designated axis, the robot moves in the multiple axes by control the motors to operate simultaneously.

However, because above-mentioned robot usually works in an opening environment (such as the fenceless environment) or co-works with the human, there is a risk of the robot colliding the human, vehicle or the other obstacle.

For solving the above-mentioned problem, a robot having an ability of detecting the obstacle based on a current variation of motors had been provided currently. A current sensor is installed on the motor of above-mentioned robot, and the robot may determine whether the mechanical arm collides any obstacle by detection of a current variation of each motor. For example, the robot determines that collision of the obstacle when the current of the motor is increased abnormally. However, above-mentioned robot detects the obstacle only after a collision, such that there is a risk of the robot or the obstacle crashing or damaging.

Another robot having an ability of detecting the obstacle based on computer vision had been provided currently. Above-mentioned robot comprises one or more camera, the robot executes an object recognition on the captured images to determine whether there is any obstacle. Above-mentioned robot can detect the obstacle before the collision, but the robot cannot detect the obstacle from all directions because of a blind region in a capture range of the camera.

Accordingly, there is currently a need for a schema of preventing the robot from collision effectively.

SUMMARY OF THE INVENTION

The present disclosed example is directed to an anti-collision method for a robot, the method can detect a moving direction of an obstacle based on electric field induction technology.

One of the exemplary embodiments, an anti-collision method is applied to a robot, the robot comprises a robotic limb, an electric field sensor installed on the robotic limb, and a motor used to move the robotic limb, the anti-collision method comprises following steps of sensing a variation of electric field over continuous time via the electric field sensor; determining a relative moving direction of an first obstacle when detecting the first obstacle by the variation of electric field; generating motor control data corresponding to a dodge vector according to the relative moving direction; and, controlling the motor to rotate according to the motor control data for making the robotic limb be moved along the dodge vector to dodge the first obstacle.

The present disclosed example can effectively make the robot dodge automatically before a collision, and prevent the robot or the obstacle from crash and damage.

BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:

FIG. 1 is an architecture diagram of a robot according to one embodiment of the present disclosed example;
FIG. 2 is a schematic view of an appearance of a robot according to one embodiment of the present disclosed example;
FIG. 3 is a schematic view of an appearance of a robot according to one embodiment of the present disclosed example;
FIG. 4A is a first schematic view of detecting an obstacle by single electric field sensor according to the present disclosed example;
FIG. 4B is a second schematic view of detecting an obstacle by single electric field sensor according to the present disclosed example;
FIG. 4C is a third schematic view of detecting an obstacle by single electric field sensor according to the present disclosed example;

FIG. 5A is a first schematic view of detecting an obstacle by multiple electric field sensors according to the present disclosed example;

FIG. 5B is a second schematic view of detecting an obstacle by multiple electric field sensors according to the present disclosed example;

FIG. 5C is a third schematic view of detecting an obstacle by multiple electric field sensors according to the present disclosed example;

FIG. 5D is a fourth schematic view of detecting an obstacle by multiple electric field sensors according to the present disclosed example;

FIG. 6A is a schematic view of a variation of electric field of multiple electric field sensors of FIG. 5A;

FIG. 6B is a schematic view of a variation of electric field of multiple electric field sensors of FIG. 5B;

FIG. 6C is a schematic view of a variation of electric field of multiple electric field sensors of FIG. 5C;

FIG. 6D is a schematic view of a variation of electric field of multiple electric field sensors of FIG. 5D;

FIG. 6E is a schematic view of a variation of energy center and a variation of maximum energy intensity;

FIG. 7 is a schematic view of dodging an obstacle according to the present disclosed example;

FIG. 8 is a schematic view of dodging multiple obstacles according to the present disclosed example;

FIG. 9A is a schematic view of a first dodge strategy according to the present disclosed example;

FIG. 9B is a schematic view of a second dodge strategy according to the present disclosed example;

FIG. 10 is a flowchart of an anti-collision method according to a first embodiment of the present disclosed example;

FIG. 11A is a first flowchart of an anti-collision method according to a second embodiment of the present disclosed example;

FIG. 11B is a second flowchart of an anti-collision method according to a second embodiment of the present disclosed example;

FIG. 12 is a flowchart of an anti-collision method according to a third embodiment of the present disclosed example;

FIG. 13 is a partial flowchart of an anti-collision method according to a fourth embodiment of the present disclosed example; and

FIG. 14 is a flowchart of an anti-collision method according to a fifth embodiment of the present disclosed example.

## DETAILED DESCRIPTION OF THE INVENTION

In cooperation with attached drawings, the technical contents and detailed description of the present disclosed example are described thereinafter according to a preferable embodiment, being not used to limit its executing scope. Any equivalent variation and modification made according to appended claims is all covered by the claims claimed by the present disclosed example.

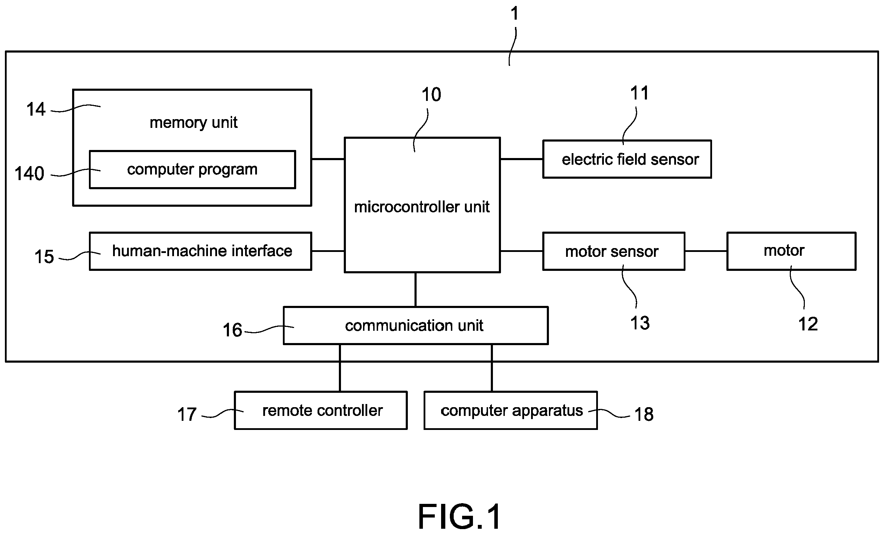

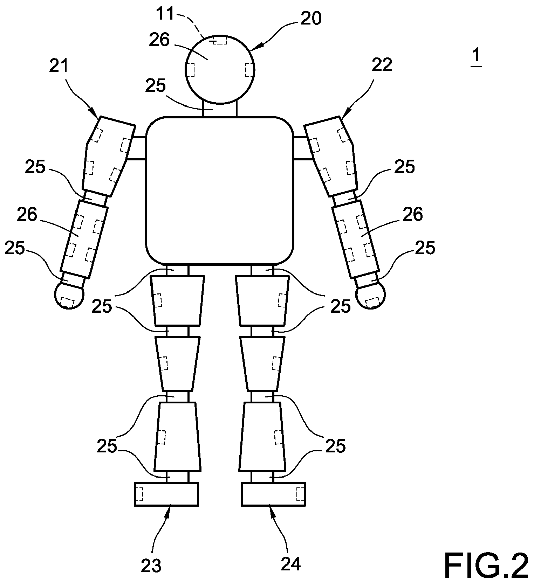

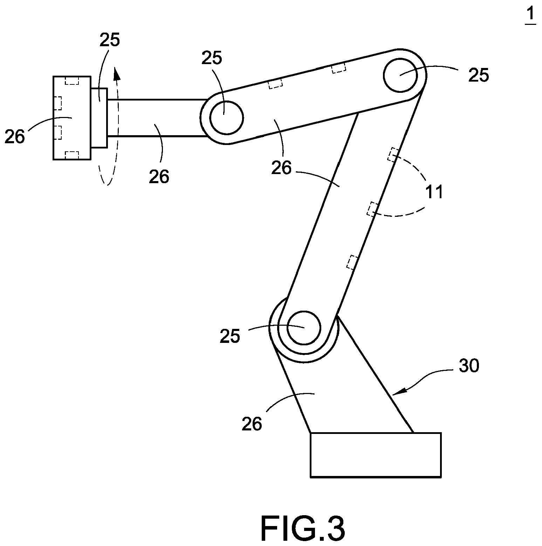

Please refer to FIG. 1, which is an architecture diagram of a robot according to one embodiment of the present disclosed example. A robot 1 is disclosed by the present disclosed example, the robot 1 is configured to comprise one or more robotic limb (such as the robotic limb 20-24 shown in FIG. 2 or the robotic limb 30 shown in FIG. 3), and have an ability of changing posture of above-mentioned robotic limb automatically or according to user operation to do the precision operation (such as picking an object, placing an object, or moving an object and so forth).

The robot 1 may comprise one or more electric field sensor 11, one or more motor 12, a memory unit 14 used to store data and a microcontroller unit 10 used to control above devices.

The electric field sensor 11 may generate an electric field (namely electromagnetic field) in the located space, and induct the energy intensity of the generated electric field by a set of induction electrodes. More specifically, when an obstacle enters into the electric field, the electric field will be disturbed and the energy intensity of the electric field will be changed. The present disclosed example senses whether there is an obstacle in the electric field via analyzing the variation of energy intensity of above-mentioned electric field, and may further analyze a moving direction or a moving velocity of the obstacle.

The motors 12 are respectively connected to the movable structures (such as gear sets, transmission shafts or the other mechanical components having an ability of passing motive force, for example, the movable structure 25 shown in FIG. 2 or FIG. 3). Each movable structure is used to concatenate the arm bodies (such as the arm bodies 26 shown in FIG. 2 or FIG. 3). Each motor 12 is configured to provide motive force to the movable structure for pushing the movable structure to move the arm body, and make the robot 1 to pose the designated action. For example, as the robot 1 shown in FIG. 2, when the motor 12 of the right-hand outputs the motive force to the movable structure 25 of the right-hand, the arm body 26 of the right-hand of the robot 1 will be moved, so as to do the actions, such as lifting up, bending or laying down and so forth.

The microcontroller unit 10 (such as microcontroller) is used to control the robot 1, and may control the motive power outputted by each motor 12.

One of the exemplary embodiments, the memory unit 14 comprises a non-transitory computer-readable media and stores a computer program 140 (such as firmware, operating system or application program of the robot 1). The computer program 140 records a plurality of computer-readable codes. The microcontroller unit 10 may execute the computer program 140 to control the robot 1 to perform each step of the anti-collision method of each embodiment of the present disclosed example.

One of the exemplary embodiments, the robot 1 comprises one or more motor sensor 13 electrically connected to the microcontroller unit 10. Each motor sensor 13 is respectively arranged on the motors 12 and configured to sense a rotational status of each of the motors 12 respectively (such as sensing a rotational position, a rotational rate or a rotational current of each of the motors 12) and generate the corresponding motor sensing data. Thus, the microcontroller unit may determine whether the robot 1 poses the designated action according to the motor sensing data.

One of the exemplary embodiments, the robot 1 may comprise a human-machine interface 15 (such as a light indicator, a speaker, one or more button(s) or the other input/output components) electrically connected to the microcontroller unit 10. The user may input an operation by the human-machine interface 15 for making the microcontroller unit 10 to execute a specific instruction (such as posing a designated action) or get a current status (such as the current operating status or the residual electricity) of the robot 1 by the human-machine interface 15.

One of the exemplary embodiments, the robot 1 may comprise a communication unit 16 (such as a Bluetooth transceiver, a Zig-Bee transceiver, a Wi-Fi transceiver, a Sub-1GHz transceiver, or the other wireless transceivers) electrically connected to the microcontroller unit 10. The user may operate a remote controller 17 (such as a dedicated remote controller for the robot 1 or a smartphone installed a corresponding application program for the robot 1) having been paired with the communication unit 16 to control the robot 1. Or, the robot 1 may establish a connection with the external computer apparatus 18 by the communication unit 16, and be controlled by the computer apparatus 18.

Please refer to FIG. 2 simultaneously, which is a schematic view of an appearance of a robot according to one embodiment of the present disclosed example. In this embodiment, the robot 1 is a humanoid robot and comprises five robotic limbs 20-24 being respectively head, right hand, left hand, right foot and left foot. each robotic limb 20-24 comprises one or more arm body 26 and one or more movable structure 25.

Moreover, one or more electric field sensor 11 may be installed on each robotic limb 20-24. One of the exemplary embodiments, each electric field sensor 11 is installed on the arm body 26 of each robotic limb 20-24. Thus, the robot 1 may sense whether there is an obstacle nearby by the electric field sensor 11 when waving/moving the robotic limb 20-24.

In this embodiment, three electric field sensors 11 are respectively installed on the upper side, left side and right side of the robotic limb 20 being the head, and used to sense the obstacles from these three directions simultaneously. The big amount of electric field sensors 11 are respectively installed on inside and outside of the robotic limbs 21-22 being the hand for precisely detecting the obstacles at both sides because the robotic limbs 21-22 being the hand have a wider movable range and a higher usage rate and have a higher probability of colliding the obstacles. The small amount of electric field sensors 11 are installed only on outside of the robotic limbs 23-24 being the leg for reducing costs because the robotic limbs 23-24 being the leg have a narrower movable range and have a lower probability of colliding the obstacles.

Please refer to FIG. 3 simultaneously, which is a schematic view of an appearance of a robot according to one embodiment of the present disclosed example. In this embodiment, the robot 1 is a mechanical arm robot and comprises only one robotic limb 30. The robotic limb 30 comprises a plurality of arm bodies 26 and movable structures 25.

In this embodiment, the arm body 26 arranged in the last section is configured to comprise a higher density of electric field sensors 11 (take four electric field sensors 11 being installed for example) for precisely detecting the obstacles around it because the arm body 26 arranged in the last section is often moved and has a higher probability of colliding the obstacles. The arm body 26 arranged in the middle section is configured to comprise a lower density of electric field sensors 11 (take only two electric field sensors 11 being installed outside for example) for saving costs because the arm body 26 arranged in the middle section be rarely moved and has a lower probability of colliding the obstacles. The arm body 26 arranged in the front section doesn't comprise any electric field sensor 11 for saving costs because of connecting to a base.

Please be noted that the configuration scheme of the electric field sensors 11 shown in FIG. 2 and FIG. 3 are just an example, the installed number and the installed position can be adjusted according to the user's requirement or the purpose of the robot 1, but this specific example is not intended to limit the scope of the present disclosed example.

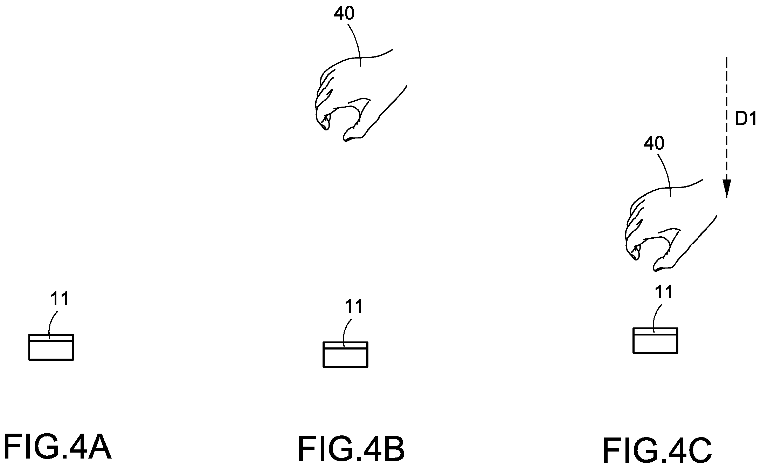

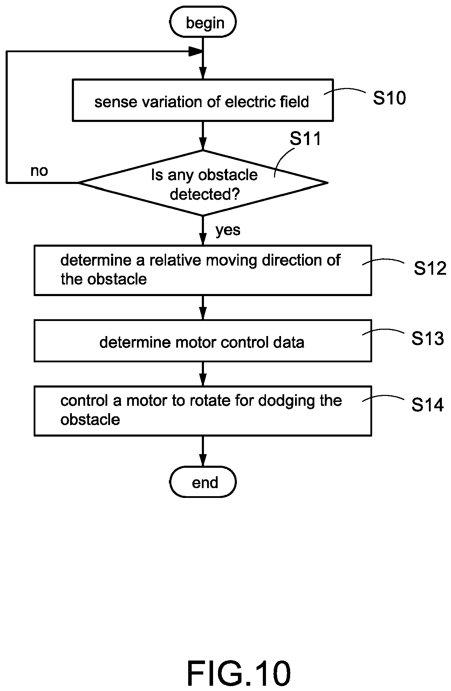

Please refer to FIG. 4A to FIG. 4C and FIG. 10 simultaneously. FIG. 4A is a first schematic view of detecting an obstacle by single electric field sensor according to the present disclosed example, FIG. 4B is a second schematic view of detecting an obstacle by single electric field sensor according to the present disclosed example, FIG. 4C is a third schematic view of detecting an obstacle by single electric field sensor according to the present disclosed example, and FIG. 10 is a flowchart of an anti-collision method according to a first embodiment of the present disclosed example. An anti-collision method for robot is disclosed by this embodiment, the anti-collision method may be adopted in the robot 1 of any embodiment shown in FIG. 1 to FIG. 3. The anti-collision method of this embodiment comprises following steps.

Step S10: the microcontroller unit 10 of the robot 1 senses a variation of electric-field over continuous time by the electric field sensor 11. One of the exemplary embodiments, the microcontroller unit 10 continuous retrieves the energy intensity of electric field from the electric field sensor 11, and computes the variation of electric-field in a designated time interval, such as computing the variation of energy intensity of each electric-field sensor 11 per second.

Step S11: the microcontroller unit 10 detects whether there is an obstacle in the electric field according to the retrieved variation of electric-field. One of the exemplary embodiments, the microcontroller unit 10 determines that there is an obstacle in the electric field when the variation of electric-field in the designated time interval (such as one second or three seconds) is greater than a threshold (such as three watts).

If the microcontroller unit 10 detects any obstacle, performs step S12. Otherwise, the microcontroller unit 10 performs step S10 again for sensing the variation of electric-field continuously.

Step S12: the microcontroller unit 10 determines a relative moving direction of the detected obstacle according to the variation of electric-field.

Take single electric field sensor 11 being installed for example, as shown in FIG. 4A, the energy intensity of the electric field is stable energy intensity (such as the maximum energy intensity, 10 watts) when no obstacle in the electric field of the electric field sensor 11. As shown in FIG. 4B, the obstacle 40 (such as a hand of human) makes the interference in the electric field and causes the variation of the electric field (such as the energy intensity of the electric field reduces to 8 watts) when the obstacle 40 enters the electric field. As shown in FIG. 4C, the obstacle 40 makes the bigger interference in the electric field and causes the more obvious variation of electric field (such as the energy intensity of the electric field reduces to 4 watts) after the obstacle 40 is further close to the electric field sensor 11.

Finally, the microcontroller unit 10 may determine that the obstacle 40 is approaching the electric field sensor 11 according to the continuous variation of electric-field, and determine the relative moving direction D1 of the obstacle 40.

Please be noted that above-mentioned relative moving direction is relative to an installation position of the electric field sensor 11 in the robotic limb, the microcontroller unit 10 may execute an analysis conversion process on the relative moving direction according to the installation position and the current position of the robotic limb for obtaining a moving direction related to the whole robot 1.

Step S13: the microcontroller unit 10 generates the motor control data corresponding to a dodge vector according to the relative moving direction. One of the exemplary embodiments, the microcontroller unit 10 may determine the dodge vector of the robotic limb according to the calculated relative moving direction (namely, the robotic limb can dodge the obstacle if moving along the dodge vector), and generate the motor control data for making the robotic limb move along the dodge vector. More specifically, above-mentioned dodge vector comprises a direction and a distance (namely the moving distance) corresponding to the movement of the robotic limb when dodging.

One of the exemplary embodiments, above-mentioned direction of the dodge vector may be the same as the relative moving direction. For example, the robotic limb may dodge heading to the left side for leaving away from the obstacle when the obstacle approaches heading the left side and the robotic limb. One of the exemplary embodiments, above-mentioned direction of the dodge vector is located in the different planes or different axes from the relative moving direction. For example, the robotic limb may be lifted up for dodging the obstacle when the obstacle approaches heading to the left side and the robotic limb.

Step S14: the microcontroller unit 10 controls the corresponding motor 12 to rotate according to the motor control data for making the robotic limb move along the dodge vector to dodge the obstacle.

Thus, the present disclosed example can effectively make the robot dodge automatically before a collision, and prevent the robot or the obstacle from crash and damage.

Please be noted that, in one of the exemplary embodiments, the microcontroller unit 10 may execute the electric field sensing simultaneously (namely the step S10-S11) for detecting whether there is a second obstacle near the robotic limb during dodging the first obstacle (namely the step S12-S14), and continue to dodge the second obstacle when detecting the second obstacle and completion of dodging the first obstacle. Thus, the present disclosed example can continue to dodging the multiple obstacles, and prevent from colliding the obstacles.

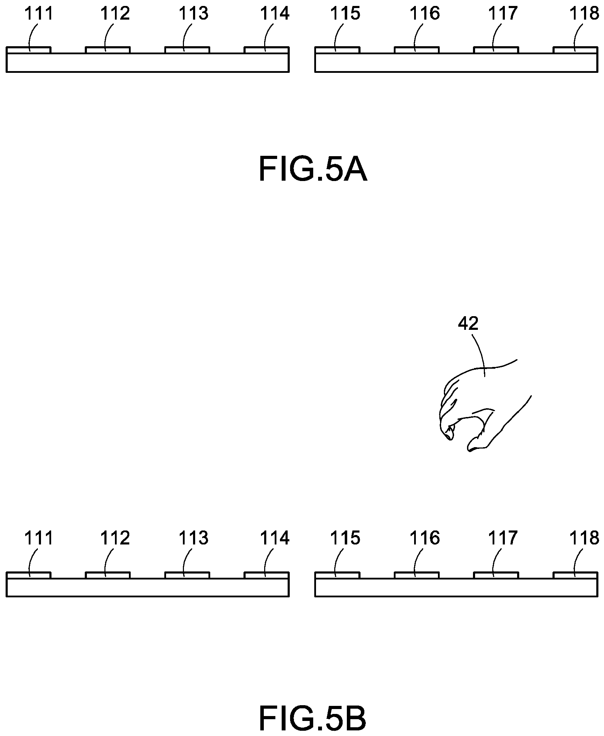

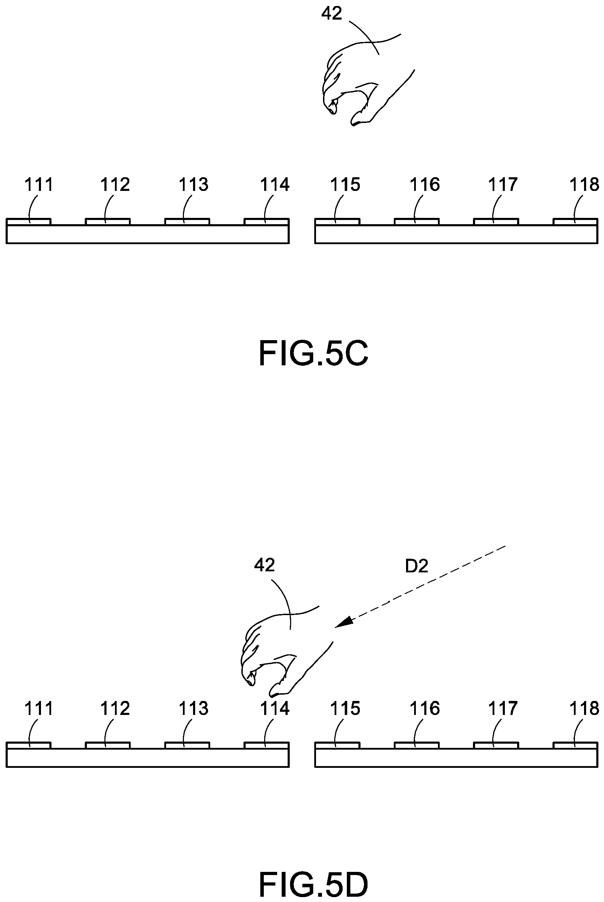

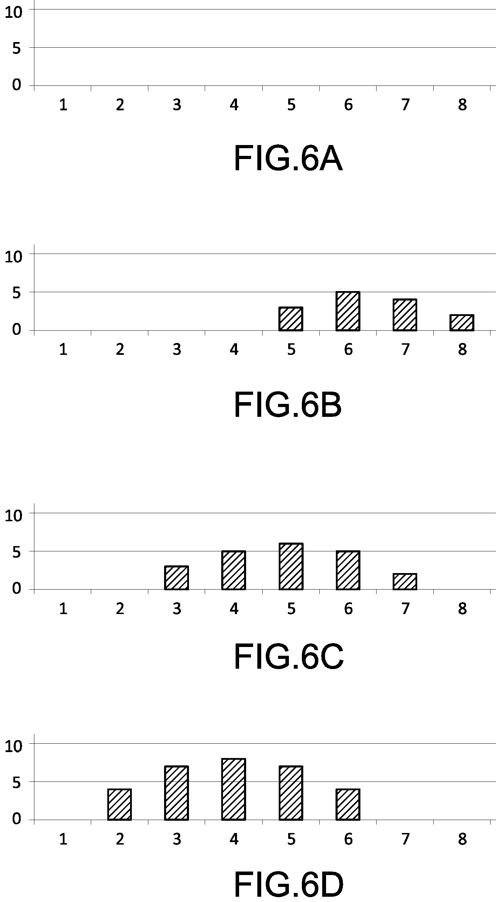

Please refer to FIG. 5A to FIG. 6A and FIG. 11A to FIG 11B simultaneously, FIG. 5A is a first schematic view of detecting an obstacle by multiple electric field sensors according to the present disclosed example, FIG. 5B is a second schematic view of detecting an obstacle by multiple electric field sensors according to the present disclosed example, FIG. 5C is a third schematic view of detecting an obstacle by multiple electric field sensors according to the present disclosed example, FIG. 5D is a fourth schematic view of detecting an obstacle by multiple electric field sensors according to the present disclosed example, FIG. 6A is a schematic view of a variation of electric field of multiple electric field sensors of FIG. 5A, FIG. 6B is a schematic view of a variation of electric field of multiple electric field sensors of FIG. 5B, FIG. 6C is a schematic view of a variation of electric field of multiple electric field sensors of FIG. 5C,

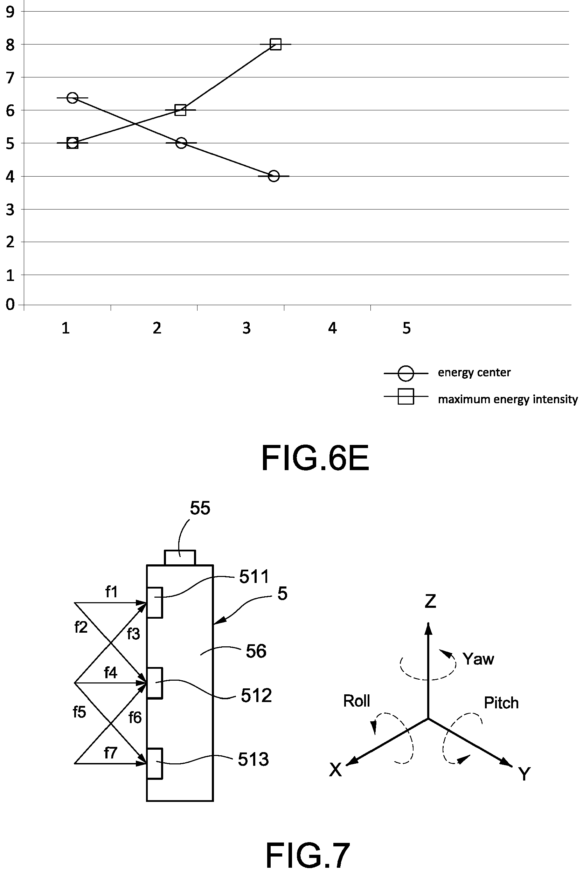

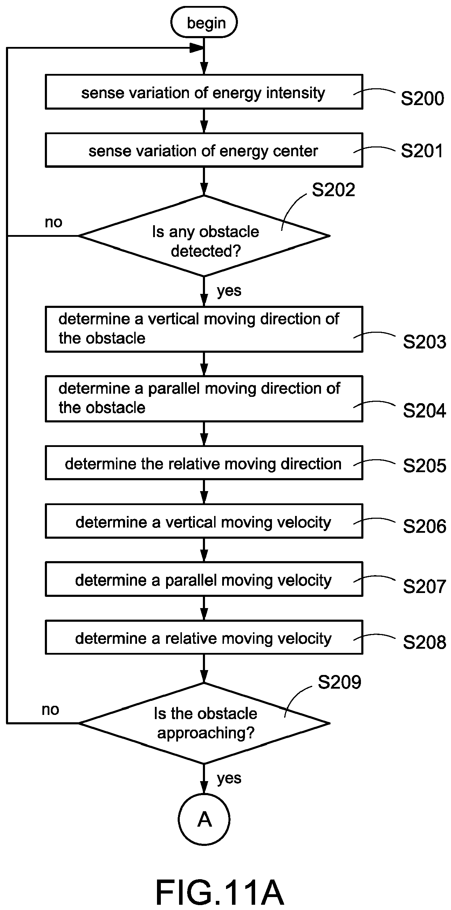

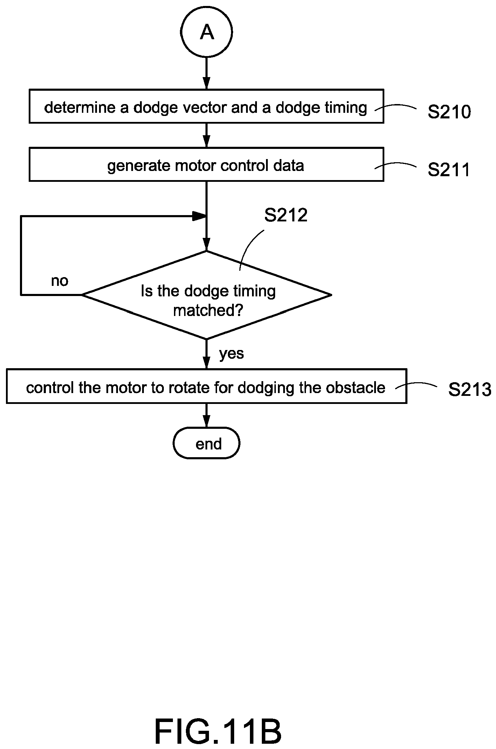

FIG. 6D is a schematic view of a variation of electric field of multiple electric field sensors of FIG. 5D, FIG. 6E is a schematic view of a variation of energy center and a variation of maximum energy intensity, FIG. 11A is a first flowchart of an anti-collision method according to a second embodiment of the present disclosed example, and FIG. 11B is a second flowchart of an anti-collision method according to a second embodiment of the present disclosed example.

The example shown in FIG. 4A to FIG. 4C can only detect a vertical moving direction and a vertical moving velocity of the obstacle 40 because of only one electric field sensor 11 being installed, and can not to detect a horizontal moving direction and a horizontal moving velocity of the obstacle 40.

For solving above-mentioned problem, this embodiment discloses a technical schema that detecting the horizontal moving direction and the horizontal moving velocity of the obstacle by a plurality of electric fields installed on the same side of the arm body (the example shown in FIG. 5A to FIG. 5D takes eight electric field sensors 111-118 being installed for example). The anti-collision method of this embodiment comprises following steps.

Step S200: the microcontroller unit 10 of the robot 1 senses a variation of energy intensity of each of electric fields over continuous time by each of the electric field sensors 11.

Step S201: the microcontroller unit 10 senses a variation of energy center of electric fields over continuous time by each of the electric field sensors 11.

More specifically, in the steps S200 and S201, the microcontroller 10 is configured to sense the variations of electric-field by the electric field sensors 111-118 in a designated time interval, and compute above-mentioned variation of energy intensity and above-mentioned variation of energy center according to the variations of electric-field and the time interval.

For example, as shown in FIG. 5A, the energy intensity of each electric field is 10 watts when no obstacle in the electric fields, the variation of energy intensity of each electric field sensor 111-118 is as shown in FIG. 6A, wherein the positions of the electric field sensors 111-118 in the example shown in FIG. 6A to FIG. 6D are respectively configured to position 1-8, the horizontal axis represents the positions of the electric field sensors, the vertical axis represents the variations of energy intensities in FIG. 6A to FIG. 6D.

Then, as shown in FIG. 5B, during the first second, the obstacle 42 (such as a hand of human) enters the electric field sensors, makes the difference interference in the electric fields and causes the variations of the electric fields (such as the energy intensity of the electric fields of the electric field sensors 111-118 respectively be 10 watts, 10 watts, 10 watts, 10 watts, 7 watts, 5 watts, 6 watts and 8 watts). The variation of energy intensity of the electric field of each electric field sensor 111-118 is shown in FIG. 6B.

Then, as shown in FIG. 5C, during the second second, the obstacle 42 moves along a moving direction D2 (comprising horizontal movement and vertical movement), makes the difference interference in the electric fields and causes the variations of the electric fields again (such as the energy intensity of the electric field of the electric field sensors 111-118 respectively be 10 watts, 10 watts, 8 watts, 5 watts, 4 watts, 5 watts, 8 watts and 10 watts). The variation of energy intensity of the electric field of each electric field sensor 111-118 is shown in FIG. 6C.

Then, as shown in FIG. 5D, during the third second, the obstacle 42 moves along a moving direction D2 continually (comprising horizontal movement and vertical movement), makes the difference interference in the electric fields and causes the variations of the electric fields again (such as the energy intensity of the electric field of the electric field sensors 111-118 respectively be 10 watts, 6 watts, 3 watts, 2 watts, 3 watts, 6 watts, 10 watts and 10 watts). The variation of energy intensity of the electric field of each electric field sensor 111-118 is shown in FIG. 6D.

Finally, the microcontroller unit 10 may compute an energy center and a maximum energy intensity at each time point, and further compute a variation of energy intensity and a variation of energy center. More specifically, as shown in FIG. 6E (the horizontal axis represents the timeline, the vertical axis represents the variations of energy intensities/the positions of electric field sensors), during the first second (the situation shown in FIG. 5B), the maximum variation of energy intensity is 5 watts and sensed by the electric field 116. During the second second (the situation shown in FIG. 5C), the maximum variation of energy intensity is 6 watts and sensed by the electric field 115. During the third second (the situation shown in FIG. 5D), the maximum variation of energy intensity is 8 watts and sensed by the electric field 114. Namely, the maximum variation of energy intensity with time is 5 watts → 6 watts → 8 watts.

Moreover, the microcontroller unit 10 may compute the energy center at each time point according to following formula (i):

$$\text{energy center} = \frac{\sum_{n=1}^{N} W_n X_n}{\sum_{n=1}^{N} W_n} \quad \dots\dots\dots\dots\dots\dots\dots\dots\dots\dots\dots\dots\dots\dots\dots\dots\dots\dots\dots\dots\dots\text{(i)}$$

, wherein N represents the number of electric field sensors, $W_n$ represents the energy intensity of electric field of the n-th electric field sensor, $X_n$ represents the installation position of the n-th electric field sensor (take position 1 to 8 for example).

In above example, the position of the energy center during the first second is about position 6.36, the position of the energy center during the second is about position 5, and the position of the energy center at the third is about position 4. Namely, the variation of energy center is position 6.36 → position 5 → position 4.

Step S202: the microcontroller unit 10 determines whether there is an obstacle according to the retrieved variation of energy intensity and the retrieved variation of energy center. One of the exemplary embodiments, the microcontroller unit 10 is configured to determine that there is an obstacle in the electric fields when the variation of energy intensity and/or the variation of energy center exceed a threshold.

If any obstacle is detected by the microcontroller unit 10, the microcontroller unit performs step S203. Otherwise, the microcontroller unit 10 performs the step S200 again for sensing the variation of electric fields continuously.

Step S203: the microcontroller unit 10 determines a vertical moving direction between the detected obstacle and the electric field sensors according to the variation of energy intensity.

One of the exemplary embodiments, as shown in FIG. 6E, the microcontroller unit 10 may compute that the variation of energy intensity increases over time. Namely, the vertical distance between the obstacle 42 and the robotic limb is gradually reduced, the vertical moving direction of the obstacle 42 is a direction of approaching the robotic limb.

Step S204: the microcontroller unit 10 determines a parallel moving direction of the obstacle according to the variation of energy center.

One of the exemplary embodiments, as shown in FIG. 6E, the microcontroller unit 10 may determine that the variation of energy center is moved from position 6.3 to position 4 over time. Namely, the horizontal direction between the obstacle 42 and the robotic limb is from the electric field sensor 116 to the electric field sensor 114.

Step S205: the microcontroller unit 10 determines the relative moving direction between the obstacle and the electric field sensors according to the vertical moving direction computed in the step S203 and the parallel moving direction computed in the step S204.

Step S206: the microcontroller unit 10 determines a vertical moving velocity between the obstacle and the electric field sensors according to a sensing time interval and the variation of energy intensity.

One of the exemplary embodiments, the microcontroller unit 10 may compute the corresponding actual vertical distance variation during the sensing time interval, and compute the vertical moving velocity according to the sensing time interval (such as three seconds) and the vertical distance variation.

Step S207: the microcontroller unit 10 determines a parallel moving velocity between the obstacle and the electric field sensors according to the sensing time interval and the variation of energy center.

One of the exemplary embodiments, the microcontroller unit 10 may compute the corresponding actual horizontal distance variation during the sensing time interval, and compute the parallel moving velocity according to the sensing time interval (such as three seconds) and the horizontal distance variation.

Step S208: the microcontroller unit 10 computes a relative moving velocity between the obstacle and the electric field sensors according to the vertical moving velocity retrieved in the step S206 and the parallel moving velocity retrieved in the step S207.

Step S209: the microcontroller unit 10 may detect whether the obstacle is approaching the robotic limb of the robot 1 and a collision may occur according to the retrieved relative moving direction and/or the retrieved relative moving velocity of the obstacle.

If the microcontroller unit 10 determines that the collision may occur, the microcontroller unit 10 performs step S210. If the microcontroller unit 10 determines that the obstacle would not collide the robot 1 (such as the obstacle being leaving from the robot 1, or the obstacle stopping moving), the microcontroller unit 10 performs step S200 again for continuous detection.

Step S210: the microcontroller unit 10 determines a direction and a distance of the dodge vector according to the relative moving direction and the relative moving velocity of the obstacle.

One of the exemplary embodiments, the distance of the dodge vector may be a fixed value, or be determined according to the relative moving direction and/or the relative moving velocity of the obstacle.

Please refer to FIG. 7 simultaneously, which is a schematic view of dodging an obstacle according to the present disclosed example. One of the exemplary embodiments, as shown in FIG. 7, three electric field sensors 511-513 are installed on outside of the robotic limb 5, the robotic limb 5 comprises an arm body 56 and a movable structure 55. The robot 1 may control the movable structure 55 by at least three motors 12 to rotate in three different axes, and make the arm body 56 do the rotation action of rolling in the X-axis, do the rotation action of pitching in the Y-axis, or do the rotation action of yawing in the Z-axis. FIG. 7 is used to exemplary explain the useful direction of each dodge vector for each obstacle approaching from the different directions, but this specific example is not intended to limit the scope of the present disclosed example.

When the relative moving direction of the obstacle is any of direction f1, f3, f4 and f7, the microcontroller unit may control the arm body 56 do the action of rolling along the X-axis (such as moving the arm body 56 inward) for dodging the obstacle. When the relative moving direction of the obstacle is any of direction f2 and f6, the microcontroller unit may control the arm body 56 do the action of rolling along the X-axis and the action of pitching along the Y-axis simultaneously (such as moving the arm body 56 inward and lifting the arm body 56 up) for dodging the obstacle. When the relative moving direction of the obstacle is direction f5, the microcontroller unit may control the arm body 56 do the action of pitching along the Y-axis (such as lifting the arm body 56 up) for dodging the obstacle.

One of the exemplary embodiments, the microcontroller unit 10 may further determine a dodge timing of executing the dodging action according to the relative moving direction and the relative moving velocity of the obstacle and the position of the robotic limb, such as executing the dodging action after five seconds, or executing the dodging action when a distance between the obstacle and the robotic limb is less than a default value.

Then, the microcontroller unit 10 performs step S211: the microcontroller unit 10 generates the corresponding motor control data according to the determined dodge vector and/or the determined dodge timing.

Step S212: the microcontroller unit 10 determines whether the dodge timing is matched. If the dodge timing is matched (such as the current time being matched with the dodge timing), the microcontroller unit 10 performs step S213. Otherwise, the microcontroller unit 10 performs the step S212 again to wait for the dodge timing coming.

Step S213: the microcontroller unit 10 controls the motor 12 to rotate according to the motor control data for making the robotic limb move along the direction of the dodge vector for the distance of the dodge vector when the dodge timing is matched, so as to dodge the obstacle.

The present disclosed example can effectively reduce the moving distance of the robotic limb for dodging the obstacle successfully via controlling the robot 1 to dodge when the current time is matched with the dodge timing, and further reduce the electric energy consumption.

Please be noted that, in another embodiment of the present disclosed example, the robot 1 may be configured to control the robotic limb to dodge directly when detecting the obstacle without consideration of dodge timing.

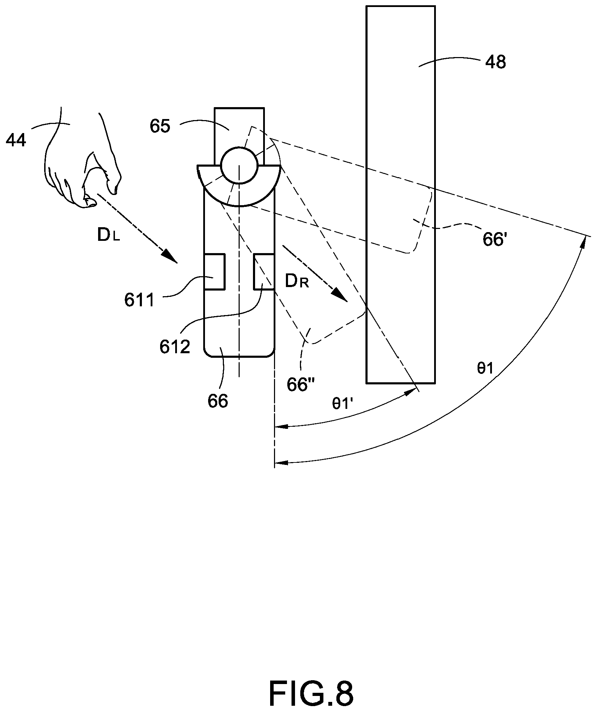

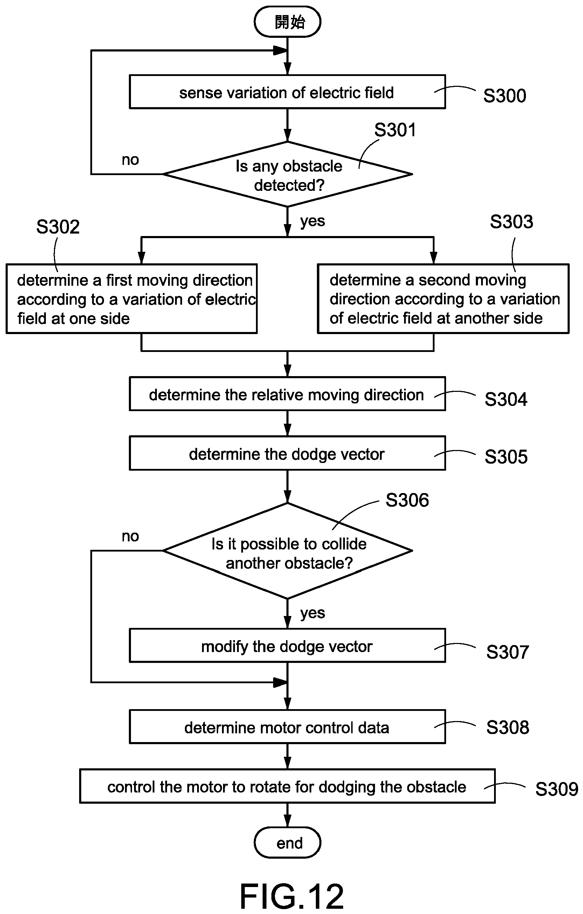

Please refer to FIG. 8 and FIG. 12 simultaneously, FIG. 8 is a schematic view of dodging multiple obstacles according to the present disclosed example, and FIG. 12 is a flowchart of an anti-collision method according to a third embodiment of the present disclosed example. As shown in FIG. 8, in this embodiment, the robotic limb of the robot 1 may comprises a movable structure 65 and an arm body 66. The electric field sensor 611 is installed on a left side of the arm body 66, and the electric field sensor 612 is installed on a right side of the arm body 66. The robot 1 of this embodiment may sense the relative moving direction of the same obstacle by the electric field sensors 611-62 arranged on the different side. Moreover, during dodging one obstacle, the robot 1 of this embodiment may further prevent from colliding another obstacle. More specifically, the anti-collision method of this embodiment comprises following steps.

Step S300: the microcontroller unit 10 of the robot 1 senses a variation of electric-field over continuous time by the electric field sensors 611-612 installed at the different side respectively.

Step S301: the microcontroller unit 10 determines whether there is an obstacle (first obstacle) in the electric field according to the variation of each electric field.

If any obstacle is detected, the microcontroller unit performs step S302-S303. Otherwise, the microcontroller unit 10 performs the step S300 again for sensing the variation of electric fields continuously.

Step S302: the microcontroller unit 10 determines a first moving direction $D_L$ of the obstacle 44 according to the variation of electric-field sensed by the electric field sensor 611 installed at the left side.

Step S303: the microcontroller unit 10 determines a second moving direction $D_R$ of the obstacle 44 according to the variation of electric-field sensed by the electric field sensor 612 installed at another side (the right side in this example).

Please be noted that the steps S302 and S303 may be performed simultaneously or one after another, but this specific example is not intended to limit the scope of the present disclosed example.

Step S304: the microcontroller unit 10 determines the relative moving direction according to the first moving direction and the second moving direction.

One of the exemplary embodiments, the microcontroller unit 10 may compute an average direction of the first moving direction and the second direction as the relative moving direction.

Step S305: the microcontroller unit 10 determines the dodge vector according to the determined relative moving direction.

One of the exemplary embodiments, the microcontroller unit 10 is configured to compute an intersection position between the relative moving direction and the arm body 66 of the robotic limb before movement, and compute the dodge vector for making the arm body 66 leave from the intersection position.

One of the exemplary embodiments, the microcontroller unit 10 may compute a relative moving vector of the obstacle 44, and configure the relative moving vector as the dodge vector.

Step S306: the microcontroller unit 10 determines in advance whether the robotic limb will collide another obstacle 48 (the second obstacle) if moving along the determined dodge vector.

For example, if the dodge vector before modification is rotate heading to the right side for rotating angle θ1, the arm body 66 can dodge the obstacle 44 after rotating heading to the right side for the rotating angle θ1 and moving to the position of arm body 66', but collide another obstacle 48 (such as a wall). Thus, the robotic limb can't really dodge all obstacles 44 and 48 if moving along the current dodge vector.

One of the exemplary embodiments, the memory unit 14 of the robot 1 records an environmental map and the position of each obstacle 48 (such as the fixed obstacles comprising the obstacle moving along a fixed moving route). The microcontroller unit 10 may determines whether the robotic limb will collide any obstacle 48 if moving along the dodge vector according to the environmental map, a position of the robot 1 in the environmental map and the position of each obstacle 48 in the environmental map.

One of the exemplary embodiments, the microcontroller unit 10 may further determine that each obstacle is a movable obstacle (such as human or pet, etc., the movable obstacle comprises the obstacle moving along no fixed route) or a fixed obstacle (such as table and chair, wall, automatic electric doors, etc.).

If the microcontroller unit 10 determines that the robot 1 will collide another obstacle, the microcontroller unit performs step S307. Otherwise, the microcontroller unit 10 performs step S308.

Step S307: the microcontroller unit 10 modify the dodge vector. One of the exemplary embodiments, the microcontroller unit 10 modifies the direction of the dodge vector or reduces the distance of the dodge vector according to a default value.

One of the exemplary embodiments, the microcontroller unit 10 modifies the dodge vector according to the position of the obstacle which the robotic limb may collide for making the robotic limb move along the modified dodge vector without colliding the obstacles 48.

For example, if the dodge vector before modification is configured to rotate heading to the right side for the rotating angle θ1 (such as 30 degrees), the microcontroller unit 10 may reduce the rotating angle to θ1' (such as 10 degrees) according to the distance between the robotic limb and the obstacle 48 as the modified dodge vector. Thus, the arm body 66 can prevent from colliding the obstacle 44 and 48 simultaneously when the arm body 66 is moved heading to the right side for the rotating angle θ1' and arrivals the position of the arm body 66'.

One of the exemplary embodiments, the microcontroller unit 10 may change the moving axis direction which the arm body 66 moves along, such as increasing a moving component of any axis for making the robotic limb leave away from a plane which the obstacle 44 and 48 are located at after moving along the modified dodge vector. For example, the dodge vector before modification is configured to rotate heading to the right side for the rotating angle θ1, and the dodge vector after modification is configured to rotate heading to the right side for the rotating angle θ1' and lifting up for a designated angle (such as 60 degrees).

Please be noted that a status may exist in fact that the robotic limb collides the obstacle 44 even though the robotic limb be moved along the modified dodge vector. However, it is possible that the movable obstacle 44 changes own moving direction actively for dodging the robotic limb (such as the human stops approaching the robotic limb if perceiving a collision will occur), but the fixed obstacle 48 does not change own moving direction actively.

Thus, one embodiment of the present disclosed example can effectively reduce the probability of collision via being configured to execute a dodge strategy of priority dodging the fixed obstacles 48. For example, the dodge vector before modification is configured to priority dodge the movable obstacle 44, and the dodge vector after modification is configured to priority dodge the fixed obstacle 48. Namely, the robot 1 is impossible to collide the fixed obstacle 48 if moving along the modified dodge vector.

Step S308: the microcontroller unit 10 generates the motor control data corresponding to the dodge vector (or the modified dodge vector if the step S307 has been performed).

One of the exemplary embodiments, the motor control data comprises the rotating angle of each motor 12. The microcontroller unit is configured to transform the dodge vector into a combination of a plurality of rotating angles of a plurality of motors.

Step S309: the microcontroller unit 10 controls each motor 12 to rotate for the corresponding rotating angle for moving the robotic limb to dodge the obstacle 44. Moreover, if the dodge vector had been modified, the robotic limb can further prevent from colliding the obstacle 48.

Thus, the present disclosed example can prevent from colliding another obstacle during dodging.

Please refer to FIG. 9A, FIG. 9B, FIG. 10 and FIG. 13, FIG. 9A is a schematic view of a first dodge strategy according to the present disclosed example;

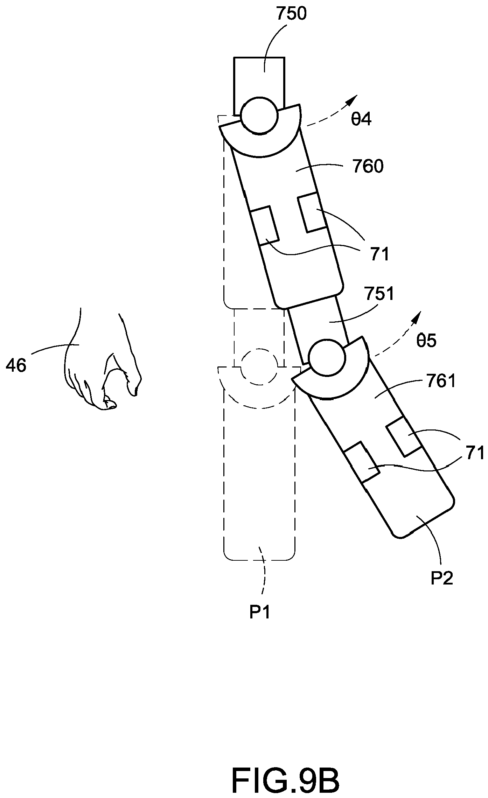

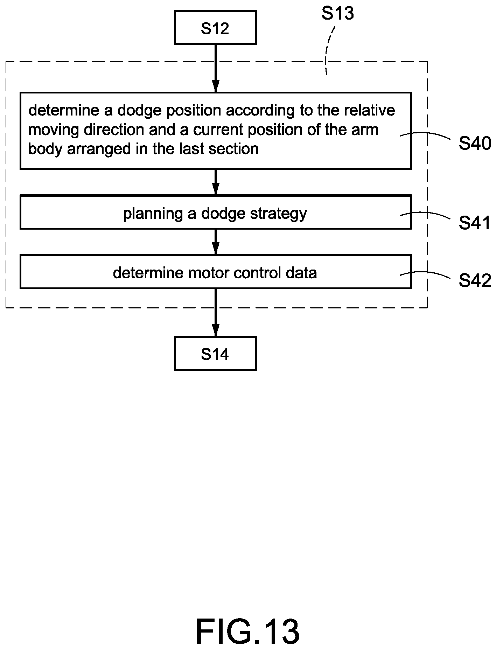

FIG. 9B is a schematic view of a second dodge strategy according to the present disclosed example, and FIG. 13 is a partial flowchart of an anti-collision method according to a fourth embodiment of the present disclosed example.

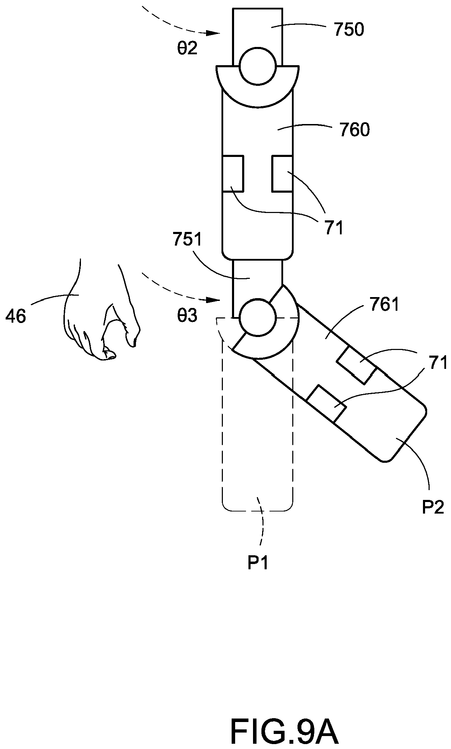

In this embodiment, the robotic limb comprises a plurality of arm bodies (take 2 arm bodies 760-761 for example in FIG. 9A and FIG. 9B)10. the arm bodies 760-761 are concatenated by a plurality of movable structures (take two movable structures 750-751 for example), the motors 12 are respectively configured to control the movable structures 750-751 to operate for moving the arm bodies 760-761.

This embodiment mainly implements a function of planning dodge strategy having an ability of planning a dodge strategy. When the robot 1 executes the dodge strategy to dodging the obstacle, the robot 1 can make a higher probability of dodging successfully or less energy consumption (such as the total moving distance of the arm bodies 760-761 is minimum).

Compare to the anti-collision method shown in FIG. 10, the step S13 of the anti-collision method of this embodiment further comprises following steps.

Step S40: the microcontroller unit 10 of the robot 1 retrieves a current position (such as position P1) of the arm body arranged in the last section (such as the arm body 761), and determines the dodge position (such as position P2) according to the relative moving direction and the current position.

One of the exemplary embodiments, the microcontroller unit 10 may estimate a moving track of the obstacle 46 according to the relative moving direction of the obstacle 46, and configure a position out of the moving track as above-mentioned dodge position.

Step S41: the microcontroller unit 10 plans a dodge strategy according to the current position and the dodge position.

One of the exemplary embodiments, the memory unit 14 records a movable range of each movable structure 750-751, the microcontroller unit 10 plans one dodge strategy according to the movable range of each movable structure 750-751. Besides, the dodge strategy comprises a rotating vector of each movable structure 750-751, and corresponds to a plurality of dodge vectors of the arm bodies 760-761. When each movable structure 750-751 rotates along the rotating vector, the connected arm body 760-761 can be moved along the corresponding dodge vector, and the arm body 761 arranged in the last section can be moved from the current position P1 to the dodge position P2.

One of the exemplary embodiments, if less energy consumption is needed, the microcontroller unit 10 may plan one dodge strategy based on a shortest path algorithm, a minimum moving energy algorithm or a shortest moving time algorithm according to the current position P1 (starting point) and the dodge position P2 (end point).

For example, the example shown in FIG. 9A takes the dodge strategy of less energy consumption, such as only controlling the movable structure 751 to rotate for a rotating angle $\theta3$ to move the arm body 761 to the dodge position P2.

One of the exemplary embodiments, if increasing the probability of dodging successfully is needed, the microcontroller unit 10 may plan one dodge strategy of making all the arm bodies 760-761 after movement be a far distance away from the obstacle 46 according to the current position P1 (starting point) and the dodge position P2 (end point).

For example, the example shown in FIG. 9B takes the dodge strategy of higher probability of dodging successfully, such as controlling the movable structure 750 to rotate for a rotating angle $\theta4$ for moving the arm body 760 away from the arm body 760, and controlling the movable structure 751 to rotate for a rotating angle $\theta5$ for moving the arm body 761 away from the obstacle 46 and moving the arm body 761 arranged in the last section to the dodge position P2. Furthermore, an angle sum of above-mentioned rotating angle $\theta4$ and $\theta5$ may greater than an angle sum of above-mentioned rotating angle $\theta2$ and $\theta3$.

Step S42: the microcontroller unit 10 generates the motor control data corresponding to the dodge strategy. One of the exemplary embodiments, the motor control data comprises a rotating angle of each motor 12.

More specifically, in the step S14, when the microcontroller unit 10 controls each motor 12 to rotate according to the rotating angles of the motor control data respectively, the microcontroller unit 10 can make each movable structure 750-751 be rotated for the corresponding rotating angle, make each arm body 760-761 move along the corresponding dodge vector, and make the arm body 761 arranged in the last section be moved to the dodge position P2.

Thus, the present disclosed example can provide pluralistic dodge means via determining the dodge strategy according to request, and implement the greater utility.

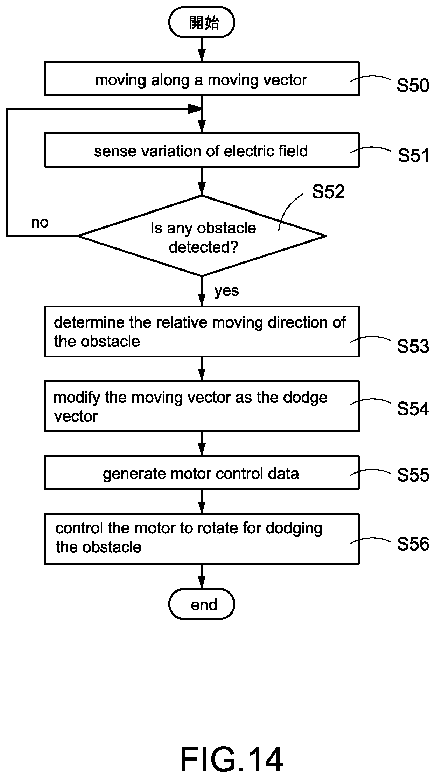

Please refer to FIG. 14 simultaneously, which is a flowchart of an anti-collision method according to a fifth embodiment of the present disclosed example.

This embodiment further provides an anti-collision method having an ability of dodging during the robot 1 moving. More specifically, the anti-collision method of this embodiment comprises following steps.

Step S50: the microcontroller unit 10 of the robot 1 control the robotic limb to move along a moving vector. One of the exemplary embodiments, the microcontroller unit 10 controls the robotic limb to move along the moving vector when receipt of an instruction from the remote controller 17 or the computer apparatus 18, the instruction is used to instruct the moving vector.

Step S51: the microcontroller unit 10 senses a variation of electric-field over continuous time by the electric field sensor 11 during movement of the robotic limb.

Step S52: the microcontroller unit 10 detects whether there is an obstacle in the electric field according to the retrieved variation of electric-field.

One of the exemplary embodiments, after starting up, the microcontroller unit 10 detects the obstacle by the electric field sensor 11 continuously without interruption, but this specific example is not intended to limit the scope of the present disclosed example.

One of the exemplary embodiments, the microcontroller unit 10 enables the electric field sensor 11 to detect the obstacle during movement of the robot 1, and disables the electric field sensor 11 to stop detecting the obstacle during the robot 1 stopping moving, so as to reduce the electric energy consumption.

If the microcontroller unit 10 detects any obstacle, the microcontroller unit 10 performs step S53. Otherwise, the microcontroller unit 10 performs the step S51 again for sensing the variation of electric-field continuously.

Step S53: the microcontroller unit 10 determines the relative moving direction of the obstacle according to the variation of electric-field.

Step S54: the microcontroller unit 10 modifies the moving vector according to the relative moving direction of the obstacle, and configures the modified moving vector as the dodge vector. One of the exemplary embodiments, the moving vector and the dodge vector have the same end point, but the different routes.

One of the exemplary embodiments, the microcontroller unit 10 determines the dodge vector for dodging the obstacle according to the relative moving direction of the obstacle, and configures a combination of the dodge vector with the moving vector as the final dodge vector.

Step S55: the microcontroller unit 10 generates the motor control data corresponding to the dodge vector.

Step S56: the microcontroller unit 10 controls each motor 12 to rotate according to the motor control data for making the robotic limb dodge along the dodge vector. Thus, the present disclosed example can prevent the robot 1 or the obstacle from crash and damage via detecting and dodging the obstacle during movement.

**Claims**

1. An anti-collision method applied to a robot (1), the robot (1) comprising a robotic limb (20-24, 30, 5), an electric field sensor (11, 111-118, 511-513, 611-612, 71) installed on the robotic limb (20-24, 30, 5), and a motor (12) used to move the robotic limb (20-24, 30, 5), the anti-collision method comprising following steps:

   a) sensing a variation of electric field over continuous time via the electric field sensor (11, 111-118, 511-513, 611-612, 71);
   b) determining a relative moving direction (D1, D2, f1-f7, $D_L$, $D_R$) of a first obstacle (40, 42, 44, 46, 48) when detecting the first obstacle (40, 42, 44, 46, 48) by the variation of electric field;
   c) generating motor control data corresponding to a dodge vector according to the relative moving direction (D1, D2, f1-f7, $D_L$, $D_R$); and
   d) controlling the motor (12) to rotate according to the motor control data for making the robotic limb (20-24, 30, 5) be moved along the dodge vector to dodge the first obstacle (40, 42, 44, 46, 48).

2. The anti-collision method according to claim 1, wherein the robot (1) comprises a plurality of the electric field sensors (11, 111-118, 511-513, 611-612, 71) installed on the same side of the robotic limb (20-24, 30, 5); the step a) is configured to sense a variation of energy intensity and a variation of energy center of a plurality of electric fields over continuous time by the electric field sensors (11, 111-118, 511-513, 611-612, 71).

3. The anti-collision method according to claim 2, wherein the step b) comprises following steps:

   b11) determining a vertical moving direction of the first obstacle (40, 42, 44, 46, 48) according to the variation of energy intensity;
   b12) determining a parallel moving direction of the first obstacle (40, 42, 44, 46, 48) according to the variation of energy center; and
   b13) determining the relative moving direction (D1, D2, f1-f7, $D_L$, $D_R$) according to the vertical moving direction and the parallel moving direction.

4. The anti-collision method according to claim 3, wherein the step b) further comprises following steps:

   b14) determining a vertical moving velocity of the first obstacle (40, 42, 44, 46, 48) according to a sensing time interval and the variation of energy intensity;
   b15) determining a parallel moving velocity of the first obstacle (40, 42, 44, 46, 48) according to the sensing time interval and the variation of energy center; and
   b16) determining a relative moving velocity according to the vertical moving velocity and the parallel moving velocity.

5. The anti-collision method according to claim 4, wherein the step c) further comprises following steps:

   c11) determining a dodge timing and a direction and a distance of the dodge vector according to the relative moving direction (D1, D2, f1-f7, $D_L$, $D_R$) and the relative moving velocity; and
   c12) generating the motor control data according to the dodge vector and the dodge timing;
   wherein the step d) is configured to control the motor (12) to rotate according to the motor control data when the dodge timing is matched for making the robotic limb (20-24, 30, 5) move heading to the direction of the dodge vector for the distance of the dodge vector to dodge the first obstacle (40, 42, 44, 46, 48).

6. The anti-collision method according to claim 1, wherein at least one electric field sensor (11, 111-118, 511-513, 611-612, 71) is installed on one side of the robotic limb (20-24, 30, 5), and at least one electric field sensor (11, 111-118, 511-513, 611-612, 71) is installed on another side of the robotic limb (20-24, 30, 5); the step b) comprises following steps:

b21) determine a first moving direction according to the variation of electric field sensed by the electric field sensor (11, 111-118, 511-513, 611-612, 71) installed on one side when detecting the first obstacle (40, 42, 44, 46, 48);

b22) determine a second moving direction according to the variation of electric field sensed by the electric field sensor (11, 111-118, 511-513, 611-612, 71) installed on another side;

b23) determine the relative moving direction (D1, D2, f1-f7, $D_L$, $D_R$) according to the first moving direction and the second moving direction.

7. The anti-collision method according to claim 1, wherein the step c) comprises following steps:

c21) determining the dodge vector according to the relative moving direction (D1, D2, f1-f7, $D_L$, $D_R$);

c22) modifying the dodge vector according to a position of a second obstacle (40, 42, 44, 46, 48) when predicting that the robotic limb (20-24, 30, 5) will collide the second obstacle (40, 42, 44, 46, 48) if moving along the original dodge vector; and

c23) generating the motor control data corresponding to the modified dodge vector, wherein the motor control data comprises a rotating angle;

wherein the step d) is configured to control the motor (12) to rotate for the rotating angle.

8. The anti-collision method according to claim 7, wherein the robot (1) comprises a memory unit (14), the memory unit (14) is configured to record an environmental map and the position of each second obstacle (40, 42, 44, 46, 48) in the environmental map; the step c22) is configured to modify a direction of the dodge vector or reduce a distance of the dodge vector when determining that the robotic limb (20-24, 30, 5) will collide any second obstacle (40, 42, 44, 46, 48) if moving along the original dodge vector according to the environmental map, a current position of the robot (1) in the environmental map and the position of each second obstacle (40, 42, 44, 46, 48) in the environmental map.

9. The anti-collision method according to claim 7, wherein the step c22) is configured to modify the dodge vector according to the position of the second obstacle (40, 42, 44, 46, 48) for making the modified dodge vector be mainly used to dodge the second obstacle (40, 42, 44, 46, 48) when predicting that the robotic limb (20-24, 30, 5) will collide the second obstacle (40, 42, 44, 46, 48) if moving along the original dodge vector, the first obstacle (40, 42, 44, 46, 48) is a movable obstacle, and the second obstacle (40, 42, 44, 46, 48) is a fixed obstacle; the step d) is configured to control the motor (12) to rotate according to the motor control data for making the robotic limb (20-24, 30, 5) moving along the modified dodge vector without collision with the second obstacle (40, 42, 44, 46, 48).

10. The anti-collision method according to claim 1, wherein the robotic limb (20-24, 30, 5) comprises a plurality of arm bodies (26, 56, 66, 66', 66", 760-761), the arm bodies (26, 56, 66, 66', 66", 760-761) are concatenated by a plurality of movable structures (25, 55, 65, 750-751), the motors (12) are respectively configured to control the movable structures (25, 55, 65, 750-751) to operate for moving the arm bodies (26, 56, 66, 66', 66", 760-761); the step c) comprises following steps:

c31) determining a dodge position (P2) according to the relative moving direction (D1, D2, f1-f7, $D_L$, $D_R$) and a current position of the arm body arranged in last section; and

c32) planning a dodge strategy corresponding to the dodge vectors according to the current position and the dodge position (P2), and generating the motor control data according to the dodge strategy, wherein the motor control data comprises a plurality of rotating angles of the motors (12);

wherein the step d) is configured to respectively control each motor (12) to rotate for the corresponding rotating angle according to the motor control data for making the arm bodies (26, 56, 66, 66', 66", 760-761) move respectively along the dodge vectors and moving the arm body (26, 56, 66, 66', 66", 760-761) arranged in the last section to the dodge position (P2).

11. The anti-collision method according to claim 10, wherein the step c32) is configured to plan the dodge strategy based on shortest path algorithm, minimum moving energy algorithm or shortest moving time algorithm.

12. The anti-collision method according to claim 1, wherein the step b) is configured to detect the first obstacle (40, 42, 44, 46, 48) according to the variation of electric field during the robotic limb (20-24, 30, 5) being moved; the step c) is configured to modify a current moving vector of the robotic limb (20-24, 30, 5) as the dodge vector according to the relative moving direction (D1, D2, f1-f7, $D_L$, $D_R$), and generate the motor control data corresponding to the dodge vector.

**13.** The anti-collision method according to claim 1, wherein the step d) is configured to move the robotic limb (20-24, 30, 5) out from an intersection position between the relative moving direction and the robotic limb (20-24, 30, 5) before movement.

**14.** The anti-collision method according to claim 1, wherein the step c) is configured to generate the motor control data when determining that the first obstacle (40, 42, 44, 46, 48) is approaching the robotic limb (20-24, 30, 5) according to the relative moving direction (D1, D2, f1-f7, $D_L$, $D_R$).

FIG.1

EP 3 643 454 A1

FIG.2

EP 3 643 454 A1

FIG.3

40

D1

40

11

11

11

FIG.4A

FIG.4B

FIG.4C

111 112 113 114 115 116 117 118

## FIG.5A

42

111 112 113 114 115 116 117 118

## FIG.5B

FIG.5C

FIG.5D

FIG.6A

FIG.6B

FIG.6C

FIG.6D

FIG.6E

FIG.7

FIG.8

750

θ2

760

71

751

46

θ3

761

71

P2

P1

FIG.9A

**FIG.9B**

FIG.10

begin

sense variation of energy intensity — S200

sense variation of energy center — S201

S202
Is any obstacle detected? — no

yes

determine a vertical moving direction of the obstacle — S203

determine a parallel moving direction of the obstacle — S204

determine the relative moving direction — S205

determine a vertical moving velocity — S206

determine a parallel moving velocity — S207

determine a relative moving velocity — S208

S209
Is the obstacle approaching? — no

yes

A

# FIG.11A

FIG.11B

FIG.12

S13

S12

determine a dodge position according to the relative
moving direction and a current position of the arm
body arranged in the last section — S40

planning a dodge strategy — S41

determine motor control data — S42

S14

FIG.13

FIG.14

**EP 3 643 454 A1**

Europäisches
Patentamt

European
Patent Office

Office européen
des brevets

# EUROPEAN SEARCH REPORT

Application Number

EP 19 16 8267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOVAK J L ET AL: "A capacitance-based proximity sensor for whole arm obstacle avoidance", PROCEEDINGS OF THE INTERNATIONAL CONFERENCE ON ROBOTICS AND AUTOMATION NICE, MAY 12 - 14, 1992; [PROCEEDINGS OF THE INTERNATIONAL CONFERENCE ON ROBOTICS AND AUTOMATION], LOS ALAMITOS, IEEE COMP. SOC. PRESS, US, vol. CONF. 8, 12 May 1992 (1992-05-12), pages 1307-1314, XP010027693, DOI: 10.1109/ROBOT.1992.220068 ISBN: 978-0-8186-2720-0 * Sections 2 and 3. Section 5, first two paragraphs. Section 6, first two paragraphs. Section 7 up to equation (11) and last paragraph. * ----- | 1-14 | INV. B25J9/16 |
| X | FEDDEMA J T ET AL: "Whole arm obstacle avoidance for teleoperated robots", ROBOTICS AND AUTOMATION, 1994. PROCEEDINGS., 1994 IEEE INTERNATIONAL C ONFERENCE ON SAN DIEGO, CA, USA 8-13 MAY 1994, LOS ALAMITOS, CA, USA,IEEE COMPUT. SOC, 8 May 1994 (1994-05-08), pages 3303-3309, XP010097543, DOI: 10.1109/ROBOT.1994.351062 ISBN: 978-0-8186-5330-8 * page 3303, left-hand column, line 1 - page 3304, right-hand column, line 7 * * Section 4 up to equation (10) * * page 3307, left-hand column, lines 1-18 * * Section 5, first two paragraphs * ----- -/-- | 1-3,5-14 | TECHNICAL FIELDS SEARCHED (IPC) B25J G05B |

The present search report has been drawn up for all claims

| Place of search | Date of completion of the search | Examiner |
|---|---|---|
| The Hague | 5 November 2019 | Prokopiou, Platon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 16 8267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IT RM20 100 104 A1 (UNI POLITECNICA DELLE MARCH E) 12 September 2011 (2011-09-12)<br>* page 1 - page 8 *<br>* page 10, lines 7-24 * | 1,2,6,7, 12-14 | |
| X | US 2017/066130 A1 (CORKUM DANIEL [US] ET AL) 9 March 2017 (2017-03-09)<br>* paragraphs [0013], [0015] - [0018], [0023] - [0038], [0064], [0065], [0085] - [0106] * | 1,6,7,9, 10,12-14 | |
| X | SCHLEGL THOMAS ET AL: "Virtual whiskers - Highly responsive robot collision avoid", 2013 IEEE/RSJ INTERNATIONAL CONFERENCE ON INTELLIGENT ROBOTS AND SYSTEMS, IEEE, 3 November 2013 (2013-11-03), pages 5373-5379, XP032537195, ISSN: 2153-0858, DOI: 10.1109/IROS.2013.6697134 [retrieved on 2013-12-27]<br>* page 5374, right-hand column, line 1 - page 5376, left-hand column, line 11 * | 1,6,7, 9-14 | TECHNICAL FIELDS SEARCHED (IPC) |
| T | Anonymous: "Intensity (physics) - Wikipedia",<br>,<br>10 September 2019 (2019-09-10), XP055638833,<br>Retrieved from the Internet: URL:https://en.wikipedia.org/wiki/Intensity_(physics) [retrieved on 2019-11-05]<br>* the whole document * | 2-4 | |

-/--

The present search report has been drawn up for all claims

| Place of search | Date of completion of the search | Examiner |
|---|---|---|
| The Hague | 5 November 2019 | Prokopiou, Platon |

EPO FORM 1503 03.82 (P04C01)

page 2 of 3

| Europäisches Patentamt / European Patent Office / Office européen des brevets | **EUROPEAN SEARCH REPORT** | Application Number<br>EP 19 16 8267 |
|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| T | Anonymous: "intensity of the electric field - Google Search",<br>,<br>5 November 2019 (2019-11-05), XP055638838,<br>Retrieved from the Internet:<br>URL:https://www.google.nl/search?ei=aDjBXa -TCaXksAebgZZw&q=intensity+of+the+electric +field+&oq=intensity+of+the+electric+field +&gs_l=psy-ab.3..0i22i30l10.49582.49582..4 9764...0.2..0.80.80.1......0....1..gws-wiz .......0i71.X8RdW2U738E&ved=0ahUKEwiv58z32 NL1AhU1MuwKHZuABQ4Q4dUDCAo&uact=5 [retrieved on 2019-11-05]<br>* the whole document *<br>----- | 2-4 | |
| | | | TECHNICAL FIELDS<br>SEARCHED (IPC) |

The present search report has been drawn up for all claims

| Place of search | Date of completion of the search | Examiner |
|---|---|---|
| The Hague | 5 November 2019 | Prokopiou, Platon |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 16 8267

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2019

| Patent document cited in search report | | Publication date | Patent family member(s) | | Publication date |
|---|---|---|---|---|---|
| IT RM20100104 | A1 | 12-09-2011 | NONE | | |
| US 2017066130 | A1 | 09-03-2017 | CN | 108602187 A | 28-09-2018 |
| | | | EP | 3347843 A1 | 18-07-2018 |
| | | | JP | 2018530441 A | 18-10-2018 |
| | | | US | 2017066130 A1 | 09-03-2017 |
| | | | US | 2019143512 A1 | 16-05-2019 |
| | | | WO | 2017044686 A1 | 16-03-2017 |

EPO FORM P0459

For more details about this annex : see Official Journal of the European Patent Office, No. 12/82